# EUROPEAN PATENT SPECIFICATION

(11) **EP 3 007 545 B1**
(45) Date of publication and mention of the grant of the patent: **28.02.2018**
(21) Application number: 14741375.1
(22) Date of filing: 09.06.2014
(51) Int. Cl.: A01G 9/24

(54) **GREENHOUSE WITH NATURAL VENTILATION**
GEWÄCHSHAUS MIT NATÜRLICHER BELÜFTUNG
SERRE AYANT UNE VENTILATION NATURELLE

(30) Priority: 14.06.2013 IT TO20130494
(43) Date of publication of application: 20.04.2016
(73) Proprietor: Consiglio per la Ricerca e la Sperimentazione In Agricoltura (C.R.A.), 00184 Roma (IT); Opus Et Vita S.r.l., 84020 Santomenna (Sa) (IT)
(72) Inventor: SANTONICOLA, Luigi, I-84098 Pontecagnano (sa) (IT); CALABRESE, Giuseppe, I-84020 Santomenna (sa) (IT)
(74) Representative: Robba, Pierpaolo
(86) International application number: PCT/IB2014/062074
(87) International publication number: WO 2014/199283

(56) References cited:
- WO-A1-02/052112
- US-A- 4 601 136
- US-A- 4 815 365
- US-A1- 2004 121 721

## Description

### Field of the Invention

The present invention relates to a greenhouse with natural ventilation in which the air exchange between the inner environment and the outer environment takes place chiefly, or completely, by exploiting the natural motions of air.

The invention is adapted particularly, though not exclusively, to be applied to cultivations of agricultural products, for instance horticultural cultivations, in the area of the Mediterranean.

### Prior Art

As is known, the conditions determining the possibility of profitably cultivating a vegetal species are mainly represented by the microclimate of the environment where the growth of the plants takes place and by the absence of noxious insects. In order to obtain a favorable microclimate in the presence of inadequate natural conditions, it is known to use greenhouses, whereas in order to avoid the presence of insects it is known to use anti-insect nets.

In agriculture there are known, for instance, greenhouses that are called "active" greenhouses because the main factors affecting agricultural production, typically temperature, humidity, luminosity, concentration of CO2, are controlled artificially. Such greenhouses are usually greenhouses having a glass covering, where control of the internal microclimate is effected without mass exchanges with the outer environment, whereby these greenhouses are also defined as "closed" greenhouses. This kind of greenhouses allows to obtain very large productions that are of high quality and constant throughout the year, but they involve remarkable initial investments, management costs and energy consumptions. For these reasons this kind of greenhouses has become widespread in cold climate areas, whereas in areas having a more temperate climate and in warm areas, for instance in the territories of the Mediterranean basin, this kind of greenhouses is used only rarely and mainly in the floricultural sector, which gives very high earnings.

At present the greenhouses typical of the Mediterranean area are simple structures using polyethylene plastic films as coverings and have poor natural ventilation capacity, thus determining a microclimate which is often unfavorable for the cultivation of the majority of the horticultural crops grown in the Mediterranean areas, especially during the summer period.

Researches have shown that the most powerful tool for conditioning is natural ventilation, determined by the joint effect of temperature gradient, and therefore density gradient, between inside and outside, the so-called chimney effect, and of the air flows brushing/hitting the greenhouse, the so-called wind effect. The conditions that maximize the natural ventilation rate, i.e. the number of changes/hour in terms of exchanged air volumes with respect to the air/volume of the greenhouse have also been ascertained; researches have shown that the best ventilation rate is obtained when the structures are provided with lateral openings and rooftop openings, when the shape of the rooftop opening follows the profile of the structure, when the ratio between the total surface of the openings and the covered surface is maximum, and when the longer is the height of the greenhouse, and that the reduction in natural ventilation efficiency caused by the presence of anti-insect nets can be overcome by installing simultaneously lateral openings and rooftop openings.

The constructive models of these greenhouses typical of the Mediterranean area can be divided into two categories: tensile structures and greenhouse tunnels.

The former conventionally have only the rooftop opening and lateral openings have been provided only in recent times, after the introduction of anti-insect nets.

Greenhouse tunnels are comprised of arches supported by posts, without openings on the rooftop and covered with a polyethylene film; usually they have a ratio volume/surface ranging from 2,5 to 3,5, have a height of 3-3,5 m at rooftop, 2,2-2,8 m at gutter, have a width of 7,2-8 m and a length ranging from 35 to 50 m. In Mediterranean regions, during the summer period, microclimate conditions arise that are unsuitable for the majority of crops because of poor natural ventilation. Inside the tunnel temperature of 40-50° at rooftop are easily reached and relative humidity (RH) is close to 100%. These tunnels are usually assembled together to form bodies the surface of which reaches even one hectare and more, as this brings about a remarkable cost reduction, but it further worsens the unfavorable microclimate conditions.

The only forms of conditioning used to date are the whitening of the covers in summer in order to reduce their visible transmittance and therefore their inner temperatures, and the hydro-tunnel technique in winter in order to limit temperature minimums and natural ventilation effected through lateral openings. Therefore greenhouse tunnels are usually structures to which it is often impossible to apply anti-insect nets, as these would limit the already poor natural ventilation, thus making the microclimate even more intolerable for humans and plants.

Some farms have tried to improve the natural ventilation rate by creating windows in the upper region of the front walls and/or by increasing the height at gutter up to 3 m. These measures have brought about an improvement in the internal microclimate, improvement which has never been quantified, but they have caused several inconveniences which have been faced by adopting further measures. It is therefore evident that the need is felt to improve ventilation by using simple, inexpensive systems, but also that attempts thereat made up to date have failed.

The natural evolution of the greenhouse tunnel has been the creation of structures having on their rooftop openings of different kinds and usually mechanically actuated, associated to the front/lateral openings and capable of securing adequate natural ventilation also when anti-insect nets are present. The document US 4 601 136 A discloses a tunnel greenhouse with rooftop openings and lateral openings. Conventional greenhouses with rooftop openings and lateral openings give the best performance in terms of natural ventilation, but they have a number of drawbacks. Opening of the openings require crank mechanisms which have to be automated. This determines purchase costs for such structures which are remarkably higher than those for greenhouse tunnels, a costly maintenance and the need to electrify large areas, with consequent costs increase. Moreover, as is known, in the case of window-like openings and skylight openings it is necessary to pay maximum attention to the wind direction: if they are opened in counter-wind direction they are excellent ventilation systems, otherwise the damages to the structure and crops can become very serious. Automation by means of suitable sensors overcomes the problem, but it increases costs and complexity. The openings have to be closed immediately in order to prevent sudden climate events from causing damages to the crop being grown. This brings about the need for a constant alert state, which is bearable for a farmer with small covered surfaces, but becomes catastrophic when the surfaces are large. In this case, too, automation by means of suitable sensors solves the problem, but it determines higher costs and complexity.

The current proposals available on the market ad capable of improving the ventilation rate inside greenhouses, particularly tunnel-like greenhouses, have therefore been penalized by high costs, building complexity and necessity for intensive maintenance and monitoring.

There is therefore a strongly felt need, particularly in Mediterranean areas, to create structures capable of exploiting at best all the natural elements that can improve the microclimate conditions of the greenhouse and thus make them more suited for the grown crops.

A first object of the invention is therefore to provide a greenhouse structure with contained costs for building and management, where ventilation takes place in a natural and efficient way.

The aforesaid drawbacks have led farmers to adopt handmade, temporary solutions, which however have the serious drawback that they constitute an easy access way for crop-noxious agents, in particular for noxious insects.

Conventional structures are indeed unsuitable for an appropriate installation of anti-insect nets and therefore the installation of such nets is difficult and often hinders remarkably the growing operations and those of opening and closing of the ventilation openings of the greenhouse. Furthermore, notwithstanding the presence of anti-insect nets, tight sealing of the greenhouse against noxious insects is not guaranteed.

The spreading of insects more and more aggressive towards crops, such as Tuta absoluta (Meyrick), has therefore caused the recourse to always-increasing quantities of phytochemicals, often making it impossible to offer agricultural products having high hygienic-sanitary safety and being more competitive on the market.

A second object of the invention is therefore to provide a greenhouse structure that allows a stable and efficient installation of anti-insect nets.

It is also known that in the assembling of greenhouse tunnels a critical point of remarkable importance for the tight sealing against the entrance of noxious insects is the region dividing the upper arch, i.e. the greenhouse roof, from the vertical side and front parts, i.e. the greenhouse walls. At present it is common practice to use a single film-winding roller for winding and unwinding both the plastic film which comes from the upper arch and the film which vertically closes the greenhouse. Adding an anti-insect net to this context is practically impossible, because several films and the net should all be wound on the same roller. This would have as a consequence an inaccurate assembly, which does not guarantee the tight sealing of the greenhouse. The obvious solution is the simultaneous use of two film-winding rollers, one for the upper part and the other for the vertical parts. This solution, however, though simple, cannot guarantee a tight sealing and causes several problems in fixing films and/or nets.

It is a further object of the invention to solve this problem by overcoming the drawbacks of the prior art.

In general the side walls and front walls of greenhouse tunnels are closed by using film-winding rollers on which a plastic film or net are wound or unwound for laterally opening or closing the greenhouse. This simple and cost-effective system, however, suffers from a drawback which has not been felt much until the problem of tight sealing with anti-insect nets, i.e. the tight sealing of the corners of the structure, has arisen. At the corners, indeed, the two rolls, i.e. the front roll and the side roller, and their corresponding films and/or nets always create a gap which is difficult to close. Static closure by clips or similar devices is often impracticable because these parts are made for being opened and closed even several times during the day, whereby the time losses would be heavy. Closing by means of static coverings by means of rigid plastic films has also been proposed, but these solutions, too, have proved to be ineffective, because the film or net always tends to shift, thus creating large gaps for the entrance of insects.

It is therefore a further object of the invention to solve this problem by overcoming the drawbacks of the prior art.

In the making of a system made up of several greenhouse bodies, it is common practice to leave passageway corridors used for the various growing operations and equipped with front accesses. As several growing operations require remarkably long carrying-out times, consequently the front access will often be opened, thus facilitating the entrance of phytophages.

It is a further object of the invention to solve this problem by overcoming the drawbacks of the prior art.

### Disclosure of the Invention

These and other objects of the inventions are achieved with the greenhouse with natural ventilation as claimed in the appended claims.

A first advantage of the invention derives from the fact that, according to a main aspect of the invention, the ventilation of the environment enclosed within the greenhouse takes place in a natural way, without the need for automation devices arranged, for example, for the opening/closing of the greenhouse rooftop.

A second advantage of the invention further derives from the possibility of permanently installing anti-insect nets. This advantage is obtained at least partially thanks to the fact that ventilation takes place naturally, without the need for automation devices.

Advantageously, according to a particular aspect of the invention, the greenhouse is always tightly protected against the entrance of insects, owing to the presence of an anti-insect net at the ventilation openings.

Advantageously, the greenhouse allows permanent installation of anti-insect nets and therefore a large use of biological fight, thus allowing to offer, in a very short time, a product, for instance a horticultural product, with high hygienic-sanitary safety.

Advantageously, the structure according to the invention is always protected against wind events, also of remarkable intensity, because the arched profile of the roof enables the wind to flow without hindrances onto the structure and even if the wind would enter the greenhouse, it could easily escape from the rooftop, thus exposing the structure to reduced stresses.

Advantageously, the greenhouse according to the invention has a fixed configuration which does not require alterations in case of unfavorable climatic events, because the inner shape of the structure enables to intercept them without the need for monitoring or for installing sensors.

Advantageously, according to another aspect of the invention, plastic films and anti-insect nets are fixed by using film-winding rollers, which are simple, user-friendly and inexpensive.

Advantageously, this greenhouse can be combined to form multiple tunnels and therefore greenhouse bodies of whatever shape and size.

Advantageously, the perimetral, front and side flashing solves the problem of how to guarantee insulation against the entrance of insects into the greenhouse and allows, also thanks to the possibility of mounting pairs of rollers without creating passages for the insects, to wind several films of waterproof material and of anti-insect net in a simple, efficient and cost-effective way.

Advantageously the flashing, i.e. the element arranged along the greenhouse walls in order to prevent rain water infiltrations at the transition zone between roof and side walls, is simple and therefore inexpensive and makes the greenhouse structure more simple and practical, makes it easy to jointly install plastic film and net, guarantees tight sealing of the greenhouse and allows to create protected passageway corridors.

Advantageously, the rooftop opening is of the kind that follows the profile of the structure. This measure ensures a stable performance in terms of ventilation rate, which will only depend on the wind speed and not on the wind direction, as well as - this being of primary importance - high safety with respect to damages that can be caused by winds. Furthermore, advantageously, the inner profile of the greenhouse allows to keep the rooftop open also in the presence of unfavorable meteorological events without the need for monitoring or sensors.

Advantageously, the system for closing corners avoids the presence of passages and allows to obtain a greenhouse tightly sealed against the entrance of insects.

Advantageously, the system for closing passageway corridors between adjacent greenhouse bodies allows to obtain a significant improvement in the accessibility to the inside of the greenhouse and in the tightness of the whole.

Furthermore, the access door to the passageway corridors, preferably of the roll-like kind, allows to avoid infestations by phytophages, which otherwise would easily creep inside the greenhouse.

### Brief Description of the Drawings

Some preferred embodiments of the invention will be provided by way of non-limiting example with reference to the attached drawings, in which:
- Figure 1 is a perspective view of two greenhouses arranged mutually adjacent in a first embodiment of the invention, partially covered by the mantle;
- Figure 2 is a front view of the greenhouse-supporting structure supporting the greenhouses of Figure 1;
- Figure 3 is a cross-sectional view of the greenhouse-supporting structure of Figure 1;
- Figure 4 is a perspective view of a part of the greenhouse-supporting structure of Figure 1;
- Figure 5 is an enlarged view of a detail of Figure 2;
- Figure 6 is a perspective view of the greenhouse according to a second embodiment of the invention, partially covered by the mantle;
- Figure 7 is a front view of the greenhouse-supporting structure of Figure 6;
- Figure 8 is a perspective view of the greenhouse-supporting structure of Figure 6;
- Figure 9 is a front view of a detail of the flashing;
- Figure 10 is a front view of the corner-closing profile;
- Figure 11 is a rear view of the corner-closing profile;
- Figure 12 is a front view of the passageway corridor;
- Figure 13 is a perspective view of the passageway corridor of Figure 12.

### Description of Some Preferred Embodiments

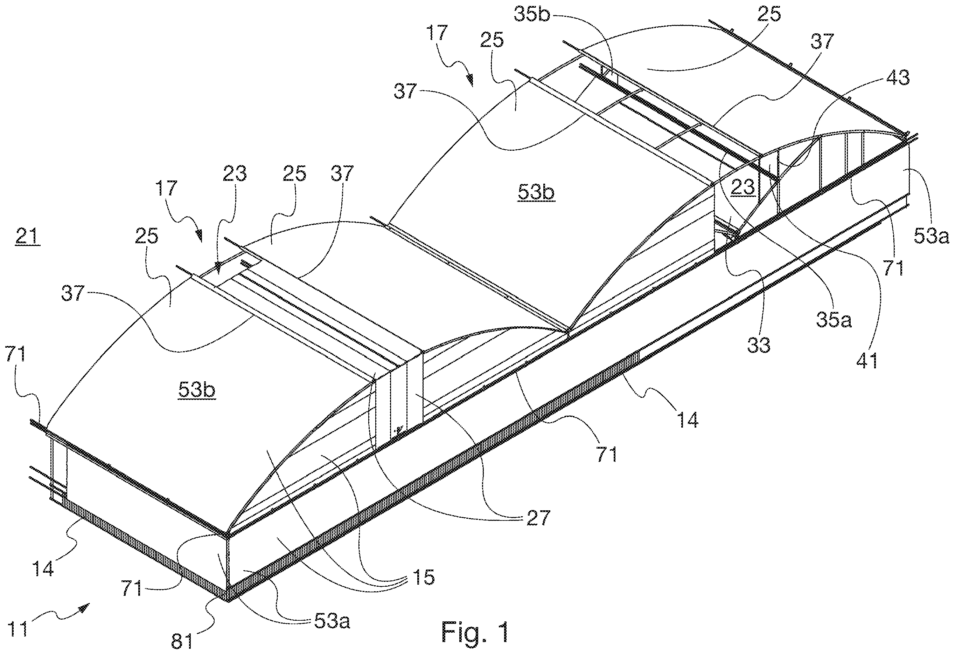

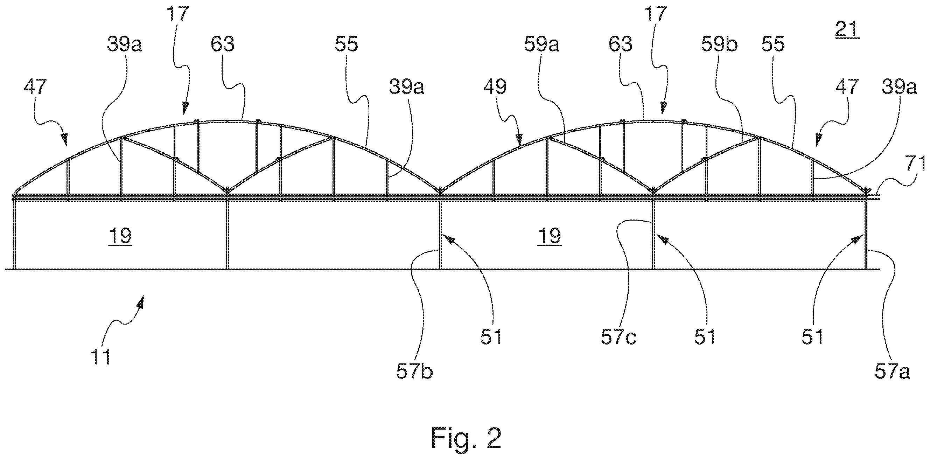

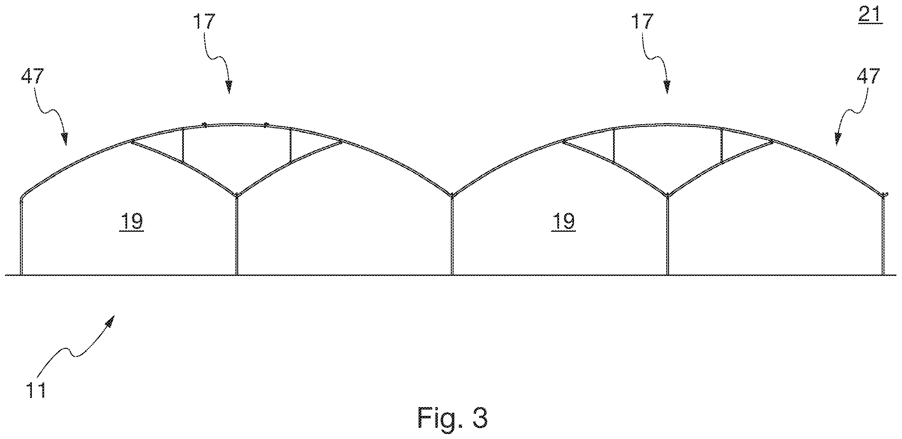

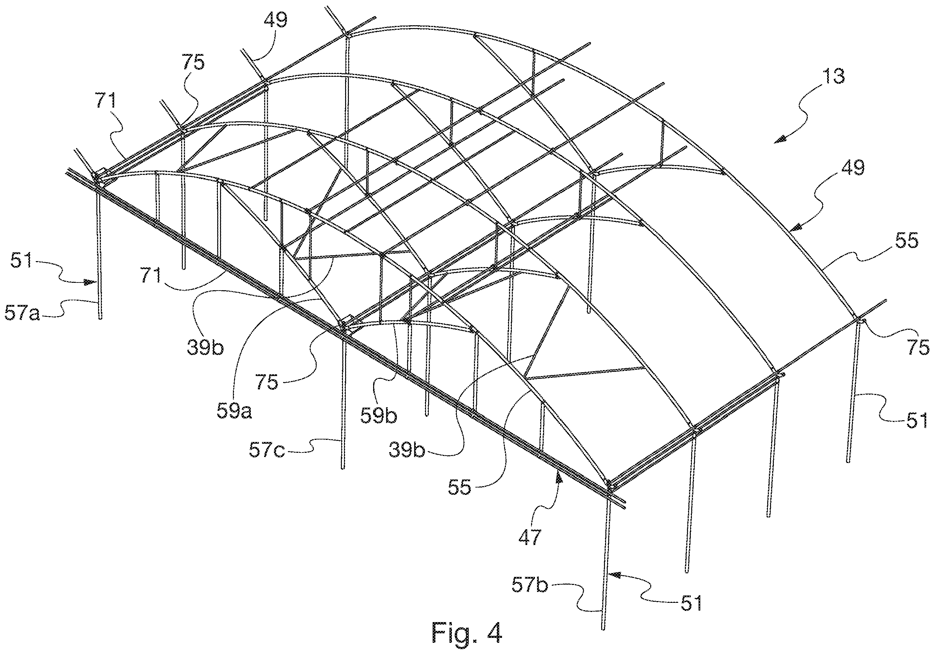

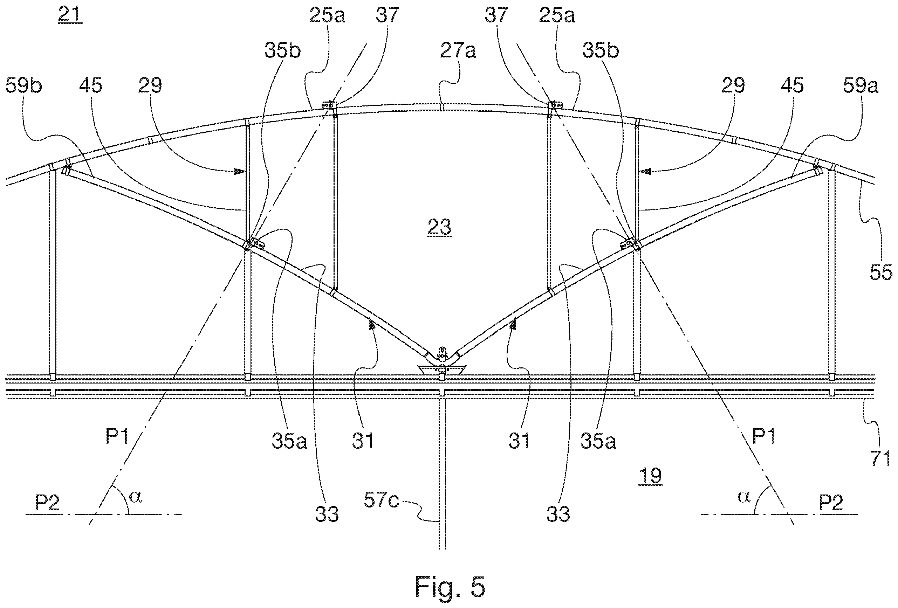

Referring to Figures 1 to 5, the greenhouse which is the subject-matter of the present invention and has been identified as a whole by reference number 11 comprises a supporting structure 13 of a covering mantle 15, said structure and mantle defining, as a whole, a tunnel-shaped body 17. A plurality of bodies 17 can be associated together, as in the example shown, which illustrates two bodies 17 arranged mutually adjacent.

The body 17 delimits a room inside the greenhouse, identified with the reference number 19 in the figures, with respect to the outer environment, identified with reference number 21. The body 17 is usually fixed to the ground by known means, for instance by driving into the ground the uprights supporting the structure 13, with or without using concrete.

The mantle 15 can consist of plastic films that are airtight and waterproof but usually permeable to light in the visible range, said films being made for instance of polyethylene and typically used in the greenhouse sector and placed on the structure 13. A skirting 14, made for instance of polycarbonate, having the function of protecting the plastic film of the mantle, can be further provided at the base of the greenhouse 11 around the side walls and partially covered by the ground.

According to a main aspect of the invention, the greenhouse 11 comprises a ventilation chamber 23 which is adapted to be passed through by air flows coming from the greenhouse inner room and directed to the outside and vice versa. The chamber 23 extends longitudinally inside the tunnel 17 and is separated from the outer environment 21 by at least one waterproof portion 25 of the mantle 15 and by at least one anti-insect net 27 adjacent to the at least one waterproof portion 25 of the mantle 15. The anti-insect net 27 is advantageously permeable to air and therefore puts the chamber 23 in communication with the outer environment 21. The chamber 23 further communicates with the inner room 19 through at least one lateral opening 29 provided between the mantle waterproof portion 25 separating the chamber 23 from the outer environment 21, and at least one water-draining surface 31 delimiting downwards the chamber 23 and separating it from the inner room 19.

In a preferred embodiment of the invention, the at least one waterproof portion 25 of the mantle 15, separating the chamber 23 from the outer environment 21, and the at least one anti-insect net 27, allowing the air exchange between the chamber 23 and the outer environment 21, comprise corresponding parallel strips 25a,27a made of a material with properties of waterproofing and of anti-insect netting, respectively, and developing mutually adjacent and longitudinally along the covering mantle 15 of the tunnel 17. In the example show the strips 25a are part, without any discontinuance, of the waterproof mantle 15 covering the roof of the structure 13, i.e. they are defined by a corresponding strip of the film that constitutes the mantle.

The draining surface 31 has an inclined plane 33 extending longitudinally along the chamber 23 and whose upper longitudinal edge 35a defines the lower side 35b of the at least one lateral opening 29 communicating the chamber 23 with the inner room 19.

According to a preferred aspect of the invention, an imaginary plane PI crossing the lower side 35b of the at least one lateral opening 29 of the chamber 23 as well as through the longitudinal edge 37 of the strip of the anti-insect net 27 closest to said lateral opening 29 forms with the horizontal plane P2, which is the plane of the ground on which the body 17 rests, an angle α preferably comprised between 50° and 60° and even more preferably of about 55°. Thanks to this measure rain can enter inside the greenhouse 11 only if the angle of the rain with respect to the horizontal plane P2 is smaller than said angle α. As the rooftop of the greenhouse 11 is covered by the anti-insect net 27, the possibility that this event may take place is reduced to a minimum. Depending on the embodiments, the width of the ventilation chamber 23 will vary upon variation of the width of the net 27, i.e. of the opening at the rooftop of the greenhouse, in order to maintain the angle α always within the preferred values.

In a first embodiment of the invention, there are two lateral openings 29 and there are also two waterproof strips 25a and the latter are arranged mutually adjacent along the opposite parallel edges 37 of the strip of the anti-insect net 27, strip which will therefore find itself in the middle between the strips 25a.

With reference to this arrangement, the draining surface 31 is defined by two inclined planes 33 converging towards the bottom and preferably sealed thereat, said planes defining, each with its upper longitudinal edge 35a, the lower side 35b of a corresponding lateral opening 29. It can be appreciated that both imaginary planes PI crossing the lower side 35b of the at least one lateral opening 29 of the chamber 23 and through the longitudinal edge 37 of the anti-insect net 27 closest to said opening 29 form an angle α of 55° with the horizontal plane P2.

According to a further aspect of the invention the at least one lateral opening 29 preferably comprises a closing element 41 consisting of a band of waterproof material that can be unwound from or wound on a winding roller 43 preferably parallel to one of the vertical sides 45 of the opening 29. The roller 43 allows the opening and closing of a plastic film, for instance a waterproof polyethylene film, and therefore the opening and closing of the openings 29 and consequently the taking or non-taking place of natural ventilation inside the greenhouse 11. The roller 43 can be driven by means of simple hand-actuated mechanisms, for instance a capstan provided with a universal joint and guided along the opening 29 by appropriate longitudinal guides. In the example shown, the closing element 41, when closing the corresponding opening 29, is situated on a vertical plane relative the ground. Alternatively, it will also be possible to provide a closing element 41 consisting of one or more waterproof films horizontally wound on rollers arranged longitudinally along the upper side of the opening 29.

According to a preferred embodiment of the invention, the supporting structure 13 has a plurality of ribs 47, preferably equipped with reinforcing rods 39a and preferably connected by tierods 39b arranged according to different patterns, in order to provide the structure with the required robustness. The ribs 47 are situated on parallel planes and each of them comprises arch-shaped elements 49 supported by vertical uprights 51 and defining, together with the mantle 15, the side walls 53a and the roof 53b of the tunnel body 17. The arch-shaped elements 49 and the vertical uprights 51 may consist, for instance, of corresponding tubes, respectively arched and rectilinear tubes, made of galvanized steel.

In a first embodiment of the invention, each rib 47 comprises a main element 55 shaped as an upwardly convex arch and supported at its ends by two vertical uprights 57a,57b. Two half-arch shaped elements 59a,59b extend from a third vertical upright 57c provided at the center of the main element 55 until they reach the arch-shaped main element 55 at the center of the first half-arch and at the center of the second half-arch, respectively.

According to this embodiment of the invention, the ventilation chamber 23 is defined between the arch-shaped main element 55 and the half-arch shaped elements 59a,59b.

The three uprights 57a,57b,57c are preferably of the same height and the chord subtending the arc between the two uprights 59a,59b can vary preferably from 12 to 20 metres. Standard heights at the rooftop, i.e. at the centre of the arch formed by the element 55, and at gutter, i.e. at the top of the uprights 57a,57b can be for example about 5 and 2,5 m, respectively. According to this embodiment, the middle zone of the arch formed by the element 55 is not covered by the waterproof mantle 15, for instance polyethylene plastic film, but it is covered by the anti-insect net 27, for instance with porosity comprised between 35 and 45%. The width of the net 27 may be comprised preferably between 1 and 3 m.

According to the invention, a greenhouse 11 with a tunnel 17 is therefore provided in which the anti-insect net 27 constitutes a ventilation opening following the profile of the mantle 15 covering the structure 13. The ventilation opening defined by the net 27 is arranged at the rooftop 63 of the greenhouse or close to said rooftop, depending on the configurations. In an embodiment of the greenhouse 11, the ratio between the surface of the openings and the surface of the covered area, with a width of the opening at the rooftop 63 of 2 m, is approximately 20% in the worst conditions in the hypothesis of a square body, and becomes 33% in case of a rectangular body having one dimension equal to 65% of the other dimension.

According to this embodiment, the two planes 33 defining the water-draining surface are made preferably from a polyethylene plastic film firmly fixed to the half-arch shaped elements 59a,59b.

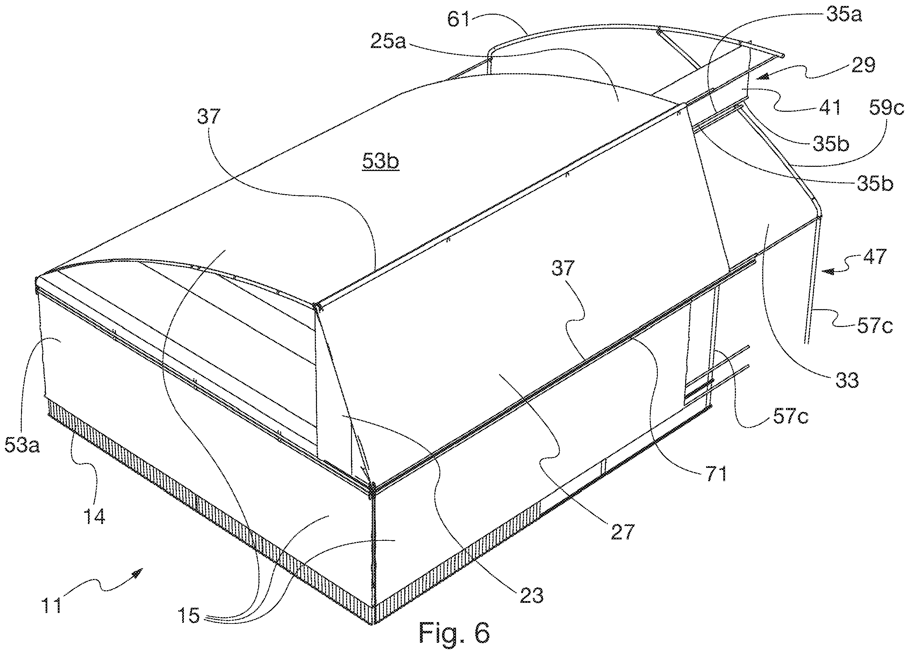

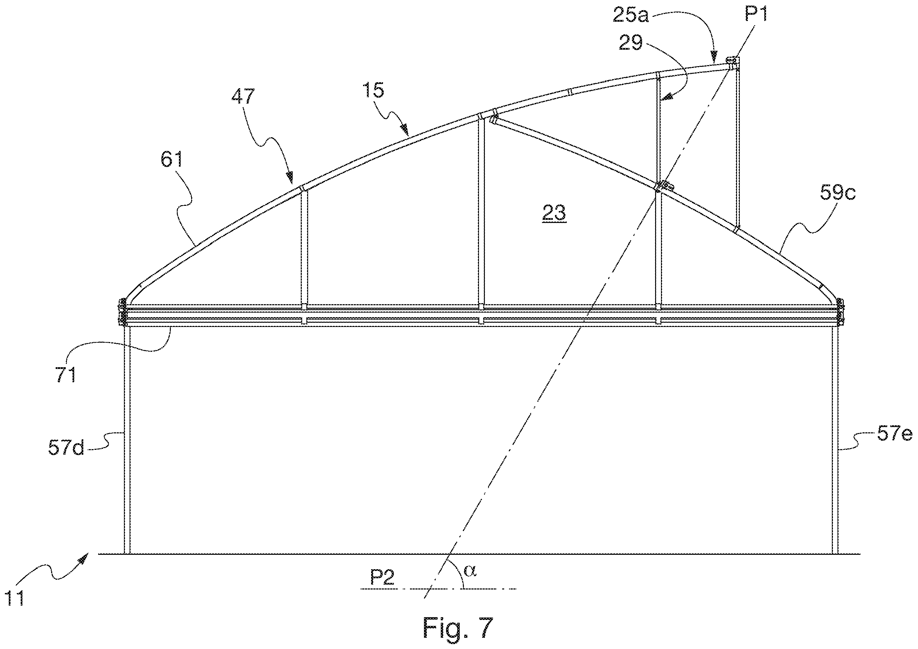

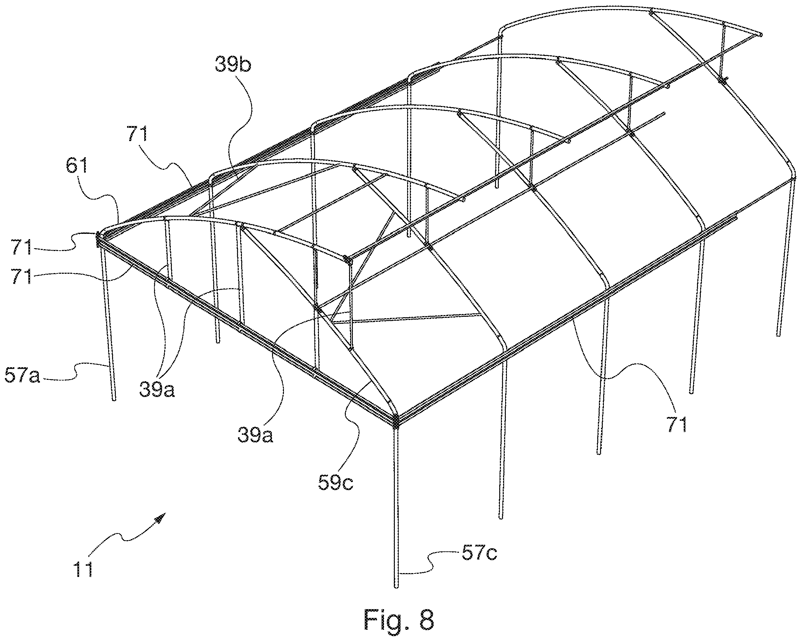

Referring to Figures 6 to 8, a second embodiment of the invention is shown in which each rib 47 comprises a main element 61 shaped as an upwardly convex partial arch and supported at a first end thereof by a vertical upright 57d. A secondary element 59c shaped as an upwardly convex half-arch which and supported, at a first end thereof opposite to the upright 57d, by a vertical upright 57e extends from said upright 57e until it reaches the main element 61 shaped as a partial arch at the centre of the rib 47. The arch-shaped main element 61 is covered by the waterproof mantle 15. According to this embodiment of the invention, the ventilation chamber 23 is defined between the main element 61 shapes as a partial arch and the secondary element 59c shaped as a half-arch.

According to this embodiment, the portion of mantle 15 overlapping the end part of the arch 61 at the chamber 23 defines the waterproof strip 25a and the strip of anti-insect net 27 is arranged between said strip 25a and the top of the uprights 57e with the edge 37 of the strip 27 adjacent to the strip 25a. Also in this embodiment, an imaginary plane PI crossing the lower side 35b of the at least one lateral opening 29 of the chamber 23 and the longitudinal edge 37 of the strip of anti-insect net 27 closest to said lateral opening 29 forms, with the horizontal plane P2 represented by the plane of the ground on which the body 17 rests, an angle α preferably comprised between 50° and 60° and even more preferably of about 55°.

This second embodiment consists of an essentially half-arch shaped variant that can be adopted when the space in the end parts of a greenhouse body does not allow to install the full-arch profile of the first embodiment. This second embodiment is applicable either on the left side or on the right side of a greenhouse obtained in accordance with the first embodiment described.

Referring to Figures 1 to 8, according to a preferred embodiment of the invention, the greenhouse 11 further comprises preferably a perimetral flashing 71 which separates the upper part of the tunnel, i.e. the roof 53b, from the side part, i.e. the walls 53a of the greenhouse, thus making it easier to install a waterproof film and the anti-insect net.

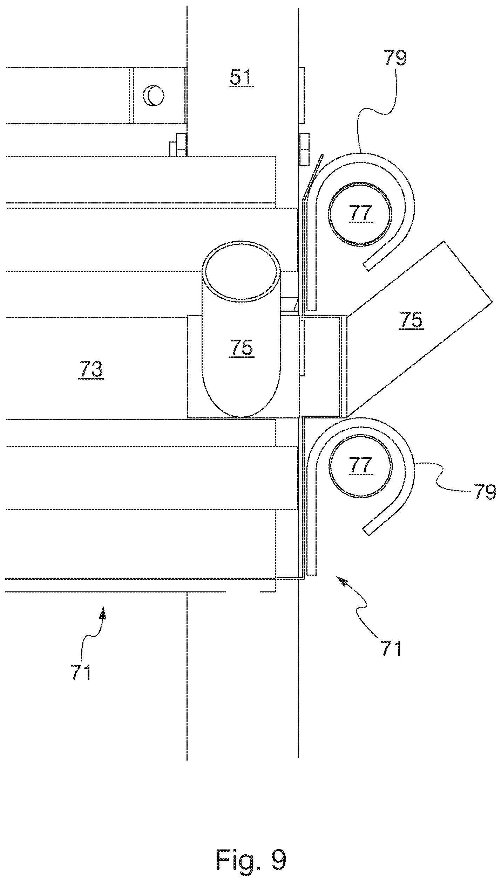

Referring to Figure 9, the flashing 71 comprises profiles 73 to which joining elements 75 are fixed into which the arched elements 49 of adjacent greenhouse bodies are inserted, without creating hindrances to the operations of fixing the film or the net and without jeopardizing the tight sealing of the greenhouse. Film-winding rollers 77 can be associated to the flashing 71 by means of brackets 79 which enable rotation of the rollers 77 at their inside.

At the separation zone between the roof 35b and the walls 35a, the flashing 71 advantageously comprises a pair of film-winding rollers 77, one for the film of the corresponding roof portion and the other for the film of the adjacent wall, and the profile 73 of the flashing tightly seals this zone between the two rollers.

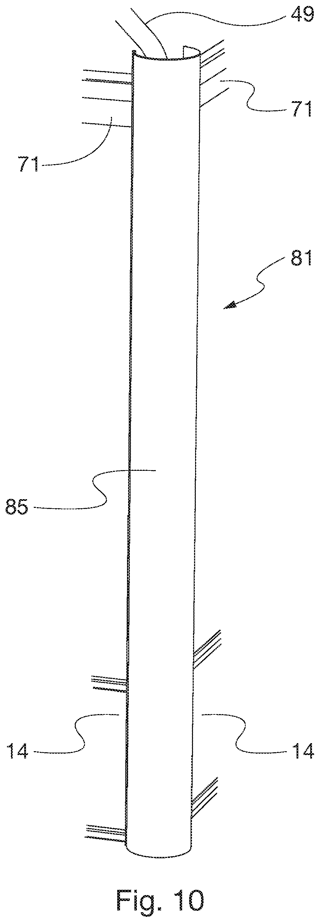

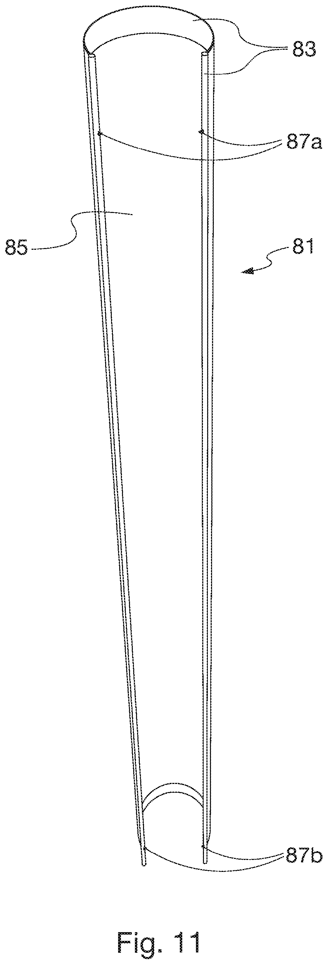

Referring to Figures 10 and 11, according to a preferred embodiment of the invention, the greenhouse 11 has corner-closing system comprising a semi-cylindrical profile 81 hinged on one side along a vertical axis arranged as close as possible to the film-winding rollers 77 associated to the flashing 71 so as to ensure maximum adherence of the film/net to the aforesaid profile during the operations of unwinding/winding the film/net. The height of the profile 81 is approximately equal to the side height of the greenhouse 11. The profile 81 can be obtained by means of a frame-like chassis 83 to which a strip of anti-insect net 85 is attached. The semi-cylindrical profile 81 is closed by fixing it by means of hooks 87a,87b to the flashing 71 above and to the skirting 14 below, respectively. When closed, the profile 81 adheres to the film-winding roller 77 preventing the creation of gaps for the entrance of insects. With a simple rotation the profile 81 is easily opened, allowing the operations of winding and/or unwinding of the lateral and/or front film/net, and can be easily closed in the same way.

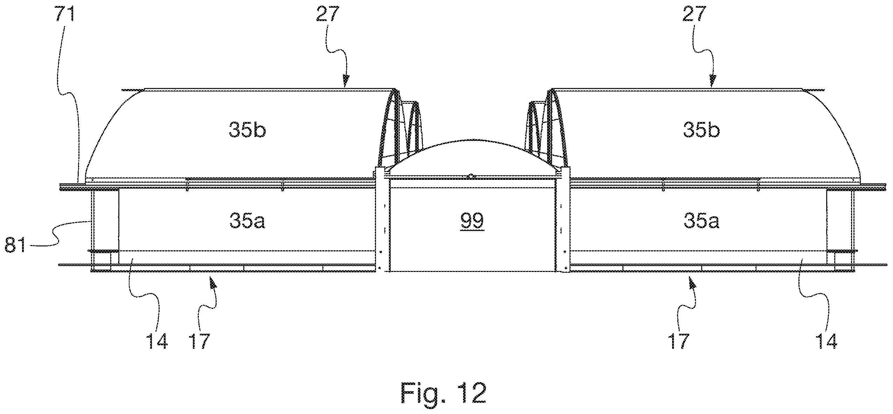

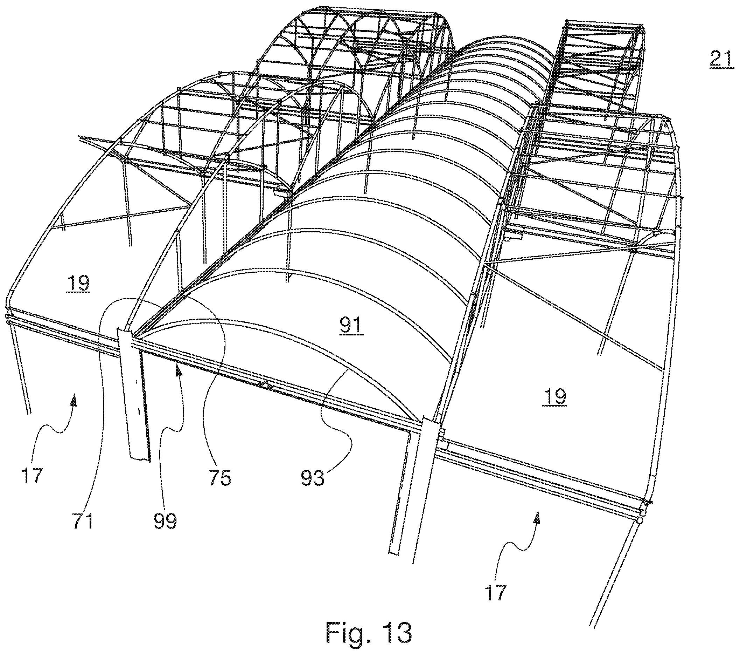

Referring to Figures 12 and 13, according to the invention a system for closing the passageway corridors 91, that may be arranged between the tunnel bodies 17, can also be provided, said system having anti-insect nets and being adapted to be mounted both on the front passageway corridors and on the lateral one. This system further improves the ratio between the total surface of the openings and the covered surface and allows to effect the various growing operations without any hindrances, while simultaneously maintaining the tight sealing of the structure. The system is formed by arch-shaped elements 93 which, by being inserted into the joints 75 mounted on the perimetral flashing of the adjacent body 17, connect together the two tunnel bodies 17 arranged front-to-front or side-by-side.

The assembly consisting of perimetral flashing 71 and protected passageway corridor 91 allows to obtain absolute tightness of the whole.

In addition, at the entrances of these protected corridors 91 a door 99 for access to the passageway corridors has been provided, preferably of the roll-type, which allows to obtain tight sealing, reduced space requirement and high user-friendliness and which has the characteristic of closing automatically by gravity after each opening. Alternatively the opening and closing of the door 99 can be automated.

Different variants and modifications falling within the same inventive principle can be brought to the greenhouse as described and illustrated, within the frame of the attached claims.

## Claims

1. Greenhouse (11) with natural ventilation comprising a supporting structure (13) of a covering mantle (15), said structure and mantle defining, as a whole, a tunnel-shaped body (17) which delimits a room (19) inside the greenhouse and is adapted to be fixed to the ground, and a ventilation chamber (23) which is adapted to be passed through by air flows coming from the greenhouse inner room and directed to the outside and vice versa and extends longitudinally inside the tunnel and is separated from the outer environment by at least one waterproof portion (25) of the mantle (15) and by at least one anti-insect net (27) which is adjacent to the at least one waterproof portion (25) of the mantle and through which the chamber (23) communicates with the outer environment, said chamber communicating with the inner room (19) through at least one lateral opening (29) provided between the waterproof portion (25) of the mantle and at least one water-draining surface (31) delimiting downwards the chamber (23) and separating it from the inner room (19).

2. Greenhouse according to claim 1, wherein the at least one waterproof portion (25) and the at least one anti-insect net (27) comprise corresponding parallel strips (25a,27a) made of a material with properties of waterproofing and of anti-insect netting permeable to air, respectively, and developing mutually adjacent and longitudinally along the covering mantle (15) of the tunnel (17).

3. Greenhouse according to claim 1 or 2, wherein the at least one draining surface (31) has an inclined plane (33) extending longitudinally along the chamber (23) and whose upper longitudinal edge (35a) defines the lower side (35b) of the at least one lateral opening (29).

4. Greenhouse according to claim 2 and 3, wherein a plane (P1) crossing the lower side (35b) of the at least one lateral opening (29) of the chamber (23) and the longitudinal edge (37) of the strip of the anti-insect net (27) closest to said opening (29) forms with the horizontal plane (P2) an angle comprised between 50° and 60°.

5. Greenhouse according to claim 2 or 3 or 4, wherein there are two lateral openings (29), there are two waterproof strips (25) arranged mutually adjacent along the opposite parallel edges (37) of the strip (27a) of the anti-insect net (27), there are two inclined planes (33) defining, each with its upper longitudinal edge (35a), the lower side (35b) of a corresponding lateral opening (29), and wherein the plane (P1) crossing the lower side (35b) of the at least one lateral opening (29) and the longitudinal edge (37) of the strip (27a) of the anti-insect net (27) closest to said opening (29) forms with the horizontal plane (P2) an angle of 55°.

6. Greenhouse according to any of the preceding claims, wherein the at least one lateral opening (29) comprises a closing element (41) consisting of a band of waterproof material that can be unwound from or wound on a winding roller (43) parallel to one of the vertical sides of the opening (29).

7. Greenhouse according to any of the preceding claims, wherein the supporting structure (13) has a plurality of parallel ribs (47), each comprising:
- a main element (55) shaped as an upwardly convex arch and supported at its ends by corresponding vertical uprights (57a,57b);
- two half-arch shaped elements (59a,59b) extending from a third vertical upright (57c) provided at the center of the main element (55) until they reach the arch-shaped main element at the center of the first half-arch and at the center of the second half-arch, respectively.

8. Greenhouse according to any of the claims 1 to 4, wherein the supporting structure has plurality of parallel ribs (47), each comprising:
- a main element (61) shaped as an upwardly convex partial arch and supported at a first end thereof by a vertical upright (57d);
- a secondary element (59c) shaped as an upwardly convex half-arch supported at a first end thereof by a vertical upright (57e) and extending from said upright (57e) until it reaches the arch-shaped main element (55) at the center of the rib.

9. Greenhouse according to any of the preceding claims, wherein there is further provided a perimetral flashing (71) which separates the roof (53b) from the walls (53a) of the greenhouse and comprises profiles (73) to which joining elements (75) are fixed into which arched elements (49) of greenhouse adjacent bodies are inserted.

10. Greenhouse according to any of the preceding claims, wherein there is provided an arrangement for closing the outer angles, said arrangement comprising a semi-cylindrical profile (81) hinged on one side along a vertical axis and equipped with closing hooks (87a,87b).

## Patentansprüche

1. Gewächshaus (11) mit natürlicher Belüftung, das eine Trägerstruktur (13) eines bedeckenden Mantels (15) aufweist, wobei die Struktur und der Mantel als Ganzes einen tunnelförmigen Körper (17) bilden, der in dem Gewächshaus einen Raum (19) begrenzt und dazu vorgesehen ist, am Boden befestigt zu werden, sowie eine Belüftungskammer (23), die dazu vorgesehen ist, von Luftströmungen durchströmt zu werden, die von dem Innenraum des Gewächshauses kommen und zur Außenseite gerichtet sind und umgekehrt und sich in dem Tunnel längs erstreckt und von der äußeren Umgebung durch einen wasserdichten Abschnitt (25) des Mantels (15) sowie durch wenigstens ein Insektenschutznetz (27), das an den wenigstens einen wasserdichten Abschnitt des Mantels angrenzt und durch welches die Kammer (23) mit der äußeren Umgebung kommuniziert, getrennt ist, wobei die Kammer mit dem Innenraum (19) durch wenigstens eine seitliche Öffnung (29) in Verbindung steht, die zwischen dem wasserdichten Abschnitt (25) des Mantels und wenigstens einer wasserableitenden Oberfläche (31) angeordnet ist, welche Kammer (23) nach unten begrenzt und von dem Innenraum (19) trennt.

2. Gewächshaus nach Anspruch 1, wobei der wenigstens eine wasserdichte Abschnitt (25) und das wenigstens eine Insektenschutznetz (27) sich entsprechende parallele Streifen (25a,27a) aus Material mit wasserdichten Eigenschaften beziehungsweise aus luftdurchlässigem Insektenschutznetz enthalten, die sich aneinander angrenzend und in Längsrichtung entlang des bedeckenden Mantels (15) des Tunnels (17) erstrecken.

3. Gewächshaus nach Anspruch 1 oder 2, wobei die wenigstens eine ableitende Fläche (31) eine geneigte Ebene (33) hat, die sich längs entlang der Kammer (23) erstreckt und deren oberer Längsrand (35a) den unteren Rand (35b) der wenigstens einen seitlichen Öffnung (29) bildet.

4. Gewächshaus nach Anspruch 2 oder 3, wobei eine Ebene (P1), welche den unteren Rand (35b) der wenigstens einen seitlichen Öffnung (29) der Kammer (23) und den Längsrand (37) des Streifens aus Insektenschutznetz (27), der der Öffnung (29) am nächsten liegt, schneidet, mit der waagrechten Ebene (P2) einen Winkel zwischen 50° und 60° einschließt.

5. Gewächshaus nach Anspruch 2 oder 3 oder 4, wobei zwei seitliche Öffnungen (29) vorhanden sind, zwei wasserdichte Streifen (25) vorhanden sind, die gemeinsam angrenzend entlang der sich gegenüberliegenden parallelen Ränder (37) des Streifens (27a) des Insektenschutznetz (27) angeordnet sind, zwei geneigte Ebenen (33) vorhanden sind, die jeweils mit ihrem oberen Längsrand (35a), den unteren Rand (35b) einer entsprechenden seitlichen Öffnung (29) definieren, und wobei die Ebene (P1) den unteren Rand (35b) der wenigstens einen seitlichen Öffnung (29) schneidet und der Längsrand (37) des Streifens (27a) des Insektenschutznetzes (27), welcher der Öffnung (29) am nächsten liegt, mit der horizontalen Ebene (P2) einen Winkel von 55° einschließt.

6. Gewächshaus nach einem der vorstehenden Ansprüche, wobei die wenigstens eine seitliche Öffnung (29) ein Schließelement (41) aufweist, das aus einem Streifen wasserdichten Materials besteht, das von einer Wickelrolle (23) abgewickelt oder auf diese aufgewickelt werden kann, die parallel zu einem der senkrechten Ränder der Öffnung (29) angeordnet ist.

7. Gewächshaus nach einem der vorstehenden Ansprüche, wobei die Trägerstruktur (13) mehrere parallele Rippen (47) hat, die jeweils aufweisen:
- ein Hauptelement (55), das als ein nach oben konvexer Bogen geformt ist und an seinen Enden von entsprechenden vertikalen Stützen getragen wird,
- zwei halbbogenförmige Elemente (59a,59b), die sich von einer dritten vertikalen Stütze (57c), die im Zentrum des Hauptelements (55) vorgesehen ist, aus erstrecken, bis sie das bogenförmige Hauptelement im Zentrum des ersten Halbbogens bzw. im Zentrum des zweiten Halbbogens erreichen.

8. Gewächshaus nach einem der Ansprüche 1 bis 4, wobei die Trägerstruktur mehrere parallele Rippen (47) hat, die jeweils aufweisen:
- ein Hauptelement (61), das als ein nach oben konvexer Teilbogen geformt und an einem ersten Ende von einer vertikalen Stütze (57d) getragen wird,
- einem Sekundärelement (59c), das als ein nach oben konvexer Halbbogen geformt ist, der an seinem ersten Ende von einer vertikalen Stütze (57e) getragen wird und sich von der Stütze (57e) aus erstreckt, bis er das bogenförmige Hauptelement (55) im Zentrum der Rippe erreicht.

9. Gewächshaus nach einem der vorstehenden Ansprüche, wobei zusätzlich eine umlaufende Verblechung (71) vorgesehen ist, die das Dach (53b) von den Wänden (53a) des Gewächshauses trennt und Profile (73) enthält, an denen Verbindungselemente (75) befestigt sind, in die gebogene Elemente (49) von an das Gewächshaus angrenzenden Körper eingeführt sind.

10. Gewächshaus nach einem der vorstehenden Ansprüche, wobei eine Anordnung zum Schließen der äußeren Winkel vorgesehen ist, und diese Anordnung ein halbzylindrisches Profil (81) enthält, das auf einer Seite gelenkig an einer vertikale Achse angebracht ist und mit Verschlusshaken (87a,87b) versehen ist.

## Revendications

1. Serre (11) dotée de ventilation naturelle comprenant une structure de support (13) d'un manteau couvrant (15), ladite structure et ledit manteau définissant, dans leur ensemble, un corps en forme de tunnel (17) qui délimite une pièce (19) à l'intérieur de la serre et est adapté pour être fixé au sol, et une chambre de ventilation (23) qui est adaptée pour être traversée par des écoulements d'air provenant de la pièce intérieure de serre et dirigés vers l'extérieur et vice versa et s'étend longitudinalement à l'intérieur du tunnel et est séparée de l'environnement extérieur par au moins une portion imperméable (25) du manteau (15) et par au moins un filet anti-insectes (27) qui est adjacent à l'au moins une portion imperméable (25) du manteau et à travers lequel la chambre (23) communique avec l'environnement extérieur, ladite chambre communiquant avec la pièce intérieure (19) par le biais d'au moins une ouverture latérale (29) prévue entre la portion imperméable (25) du manteau et au moins une surface d'évacuation d'eau (31) délimitant vers le bas la chambre (23) et la séparant de la pièce intérieure (19).

2. Serre selon la revendication 1, dans laquelle l'au moins une portion imperméable (25) et l'au moins un filet anti-insectes (27) comprennent des bandes parallèles (25a, 27a) correspondantes réalisées en un matériau doté de propriétés d'imperméabilisation et d'une nappe de filet anti-insectes perméable à l'air, respectivement, et évoluant mutuellement adjacentes et longitudinalement le long du manteau couvrant (15) du tunnel (17).

3. Serre selon la revendication 1 ou 2, dans laquelle l'au moins une surface d'évacuation (31) a un plan incliné (33) s'étendant longitudinalement le long de la chambre (23) et dont le bord longitudinal supérieur (35a) définit le côté inférieur (35b) de l'au moins une ouverture latérale (29).

4. Serre selon les revendications 2 et 3, dans laquelle un plan (P1) croisant le côté inférieur (35b) de l'au moins une ouverture latérale (29) de la chambre (23) et le bord longitudinal (37) de la bande du filet anti-insectes (27) le plus proche de ladite ouverture (29) forme avec le plan horizontal (P2) un angle compris entre 50° et 60°.

5. Serre selon la revendication 2 ou 3 ou 4, dans laquelle on a deux ouvertures latérales (29), on a deux bandes imperméables (25) agencées mutuellement adjacentes le long des bords parallèles opposés (37) de la bande (27a) du filet anti-insectes (27), on a deux plans inclinés (33) définissant, chacun avec son bord longitudinal supérieur (35a), le côté inférieur (35b) d'une ouverture latérale (29) correspondante, et dans laquelle le plan (P1) croisant le côté inférieur (35b) de l'au moins une ouverture latérale (29) et le bord longitudinal (37) de la bande (27a) du filet anti-insectes (29) le plus proche de ladite ouverture (29) forme avec le plan horizontal (P2) un angle de 55°.

6. Serre selon l'une quelconque des revendications précédentes, dans laquelle l'au moins une ouverture latérale (29) comprend un élément de fermeture (41) constitué d'une sangle de matériau imperméable qui peut être déroulée de ou enroulée sur un rouleau d'enroulement (43) parallèle à l'un des côtés verticaux de l'ouverture (29).

7. Serre selon l'une quelconque des revendications précédentes, dans laquelle la structure de support (13) comporte une pluralité de nervures parallèles (47), comprenant chacune :
- un élément principal (55) formé en tant qu'arc convexe vers le haut et supporté au niveau de ses extrémités par des montants verticaux (57a, 57b) correspondants ;
- deux éléments en forme de demi-arc (59a, 59b) s'étendant depuis un troisième montant vertical (57c) prévu au centre de l'élément principal (55) jusqu'à ce qu'ils atteignent l'élément principal en forme d'arc au centre du premier demi-arc et au centre du second demi-arc, respectivement.

8. Serre selon l'une quelconque des revendications 1 à 4, dans laquelle la structure de support comporte une pluralité de nervures parallèles (47), comprenant chacune :
- un élément principal (61) formé en tant qu'arc partiel convexe vers le haut et supporté au niveau d'une première extrémité de celui-ci par un montant vertical (57d) ;
- un élément secondaire (59c) formé en tant que demi-arc convexe vers le haut supporté au niveau d'une première extrémité de celui-ci par un montant vertical (57e) et s'étendant depuis ledit montant (57e) jusqu'à ce qu'il atteigne l'élément principal (55) en forme d'arc au centre de la nervure.

9. Serre selon l'une quelconque des revendications précédentes, dans laquelle est en outre prévu un solin périmétrique (71) qui sépare le toit (53b) des murs (53a) de la serre et comprend des profilés (73) auxquels des éléments d'assemblage (75) sont fixés dans lesquels sont insérés des éléments arqués (49) de corps adjacents de la serre.

10. Serre selon l'une quelconque des revendications précédentes, dans laquelle est prévu un agencement pour fermer les angles extérieurs, ledit agencement comprenant un profilé semi-cylindrique (81) articulé sur un côté selon un axe vertical et équipé de crochets de fermeture (87a, 87b).
